# EUROPEAN PATENT APPLICATION

(11) **EP 4 513 920 A1**
(43) Date of publication of application: **26.02.2025**
(21) Application number: 22944579.6
(22) Date of filing: 17.10.2022
(51) Int. Cl.: H04W 8/24, H04W 72/04

(54) **POWER DISTRIBUTION METHOD AND DEVICE**

(30) Priority: 31.05.2022 CN 202210608971
(71) Applicant: Huawei Technologies Co., Ltd., Shenzhen, Guangdong 518129 (CN)
(72) Inventor: WANG, Wei, Shenzhen, Guangdong 518129 (CN)
(74) Representative: Isarpatent
(86) International application number: PCT/CN2022/125715
(87) International publication number: WO 2023/231271

(57) **Abstract**

This application provides a method and an apparatus for power allocation. The method includes: A control apparatus receives capability information from a radio frequency apparatus, where the capability information indicates a correspondence between a power boost amplitude of a first channel and a power back-off amplitude of a second channel. The control apparatus sends first indication information to the radio frequency apparatus, where the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel. In this way, flexibility of the power allocation can be improved.

## Description

This application claims priority to Chinese Patent Application No. 202210608971.9, filed with the China National Intellectual Property Administration on May 31, 2022 and entitled "METHOD AND APPARATUS FOR POWER ALLOCATION", which is incorporated herein by reference in its entirety.

### TECHNICAL FIELD

This application relates to the field of communication technologies, and more specifically, to a method and an apparatus for power allocation.

### BACKGROUND

Transmission power of a channel in a communication system may be lost in some scenarios. For example, when a radio unit disables some transmit channels to reduce system power consumption, a power loss of some channels may be caused. To ensure transmission quality of information carried by a channel, a system may reserve a part of power when allocating the power. When the communication system needs to boost transmit power of information carried by a channel, the radio unit may boost the transmit power by using the reserved part of power. However, the reserved part of power is fixed. In some scenarios, the reserved part of power may not meet a boost requirement.

### SUMMARY

This application provides a method and an apparatus for power allocation, to improve flexibility of the power allocation.

According to a first aspect, a method for power allocation is provided. The method may be performed by a control apparatus or a chip in the control apparatus. The method includes: A control apparatus receives capability information from a radio frequency apparatus, where the capability information indicates a correspondence between a power boost amplitude of a first channel and a power back-off amplitude of a second channel. The control apparatus sends first indication information to the radio frequency apparatus, where the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel.

It may be understood that, in embodiments of this application, the power boost amplitude of the first channel may be a power boost amplitude of transmit power of information carried by the first channel. The power back-off amplitude of the second channel may be a power back-off amplitude of transmit power of information carried by the second channel.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate the transmit power of the information carried by the first channel of the radio frequency apparatus to increase by the first amplitude, and the transmit power of the information carried by the second channel to reduce by the second amplitude. In this way, the radio frequency apparatus can boost, in a manner of reducing the transmit power of the information carried by the second channel, the transmit power of the information carried by the first channel, thereby improving flexibility of the power allocation.

With reference to the first aspect, in some implementations of the first aspect, the control apparatus sends second indication information to the radio frequency apparatus. The second indication information indicates a first bandwidth. The first bandwidth is used for carrying the first channel and the second channel. The first bandwidth is determined based on the required boost amplitude and the capability information.

Optionally, the first bandwidth is less than an initial bandwidth. The initial bandwidth is a bandwidth initially configured by the control apparatus for carrying the first channel and the second channel.

Therefore, in this application, the control apparatus may further increase, in combination with a manner of reducing the first bandwidth, a power baseline of a power spectrum corresponding to the first bandwidth, so that a capability of the power boost amplitude of the first channel is further improved, thereby improving reliability of sending the information carried by the first channel.

With reference to the first aspect, in some implementations of the first aspect, the power boost amplitude is less than or equal to the required boost amplitude.

Therefore, in this application, the control apparatus may preferentially use a manner of reducing the transmit power of the information carried by the second channel to boost the transmit power of the information carried by the first channel. When the power boost amplitude indicated by the capability information does not meet the required boost amplitude, the control apparatus further boosts the transmit power of the information carried by the first channel in combination with a manner of increasing the power baseline by reducing a bandwidth.

With reference to the first aspect, in some implementations of the first aspect, the control apparatus sends request information to the radio frequency apparatus. The request information is used for requesting the capability information.

Therefore, in this application, the radio frequency apparatus may send the capability information to the control apparatus in response to the request information, so that system flexibility can be improved.

With reference to the first aspect, in some implementations of the first aspect, the required boost amplitude corresponds to a quantity of disabled transmit channels of the radio frequency apparatus.

Therefore, in this application, in a scenario in which the radio frequency apparatus disables the transmit channel, the transmit power of the information carried by the first channel is boosted, to prevent disabling of the transmit channel from affecting quality of sending, by the radio frequency apparatus, the information carried by the first channel, thereby improving system reliability.

With reference to the first aspect, in some implementations of the first aspect, the first channel is a control channel, and the second channel is a data channel.

With reference to the first aspect, in some implementations of the first aspect, the information carried by the first channel includes a synchronization signal block SSB.

Therefore, in this application, reliable transmission of the SSB can be ensured by boosting the transmit power of the information carried by the first channel, thereby improving reliability of system communication.

According to a second aspect, a method for power allocation is provided. The method may be performed by a radio frequency apparatus or a chip in the radio frequency apparatus. The method includes: The radio frequency apparatus sends capability information to a control apparatus, where the capability information indicates a correspondence between a power boost amplitude of a first channel and a power back-off amplitude of a second channel. The radio frequency apparatus receives first indication information from the control apparatus, where the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate transmit power of information carried by the first channel of the radio frequency apparatus to increase by the first amplitude, and transmit power of information carried by the second channel to reduce by the second amplitude. In this way, the radio frequency apparatus can boost, in a manner of reducing the transmit power of the information carried by the second channel, the transmit power of the information carried by the first channel, thereby improving flexibility of the power allocation.

With reference to the second aspect, in some implementations of the second aspect, the method further includes: The radio frequency apparatus sends, based on the first amplitude indicated by the first indication information, the information carried by the first channel, and sends, based on the second amplitude indicated by the first indication information, the information carried by the second channel.

With reference to the second aspect, in some implementations of the second aspect, the method further includes: The radio frequency apparatus receives second indication information from the control apparatus. The second indication information indicates a first bandwidth. The first bandwidth is used for carrying the first channel and the second channel. The first bandwidth is determined based on the required boost amplitude and the capability information.

With reference to the second aspect, in some implementations of the second aspect, the method further includes: The radio frequency apparatus sends, based on the first amplitude indicated by the first indication information and the first bandwidth indicated by the second indication information, the information carried by the first channel, and sends, based on the second amplitude indicated by the first indication information and the first bandwidth indicated by the second indication information, the information carried by the second channel.

With reference to the second aspect, in some implementations of the second aspect, the power boost amplitude is less than or equal to the required boost amplitude.

With reference to the second aspect, in some implementations of the second aspect, the method further includes: The control apparatus sends request information to the radio frequency apparatus. The request information is used for requesting the capability information.

With reference to the second aspect, in some implementations of the second aspect, the required boost amplitude corresponds to a quantity of disabled transmit channels of the radio frequency apparatus.

With reference to the second aspect, in some implementations of the second aspect, the first channel is a control channel, and the second channel is a data channel.

With reference to the second aspect, in some implementations of the second aspect, the information carried by the first channel includes a synchronization signal block SSB.

According to a third aspect, a method for power allocation is provided. The method may be performed by a control apparatus or a chip in the control apparatus. The method includes: A control apparatus sends indication information to a radio frequency apparatus, where the indication information indicates a first bandwidth, the first bandwidth is determined based on a required boost amplitude of a first channel, a numerical value of the first bandwidth is less than an initial bandwidth value, and the initial bandwidth value is a bandwidth value initially configured by the control apparatus for carrying the first channel. A radio unit sends the first channel based on the indication information.

In other words, the control apparatus reduces, based on the required boost amplitude of the first channel, the bandwidth value used for carrying the first channel, and a reduced bandwidth is the first bandwidth.

Therefore, in this application, the control apparatus may determine a bandwidth used for carrying the first channel, to boost transmit power of information carried by the first channel, so that the information carried by the first channel can be reliably transmitted, thereby improving reliability of system communication.

With reference to the third aspect, in some implementations of the third aspect, the information carried by the first channel includes a synchronization signal block SSB.

According to a fourth aspect, an apparatus for power allocation is provided. The apparatus includes a transceiver unit and a processing unit. The transceiver unit is configured to receive capability information from a radio frequency apparatus. The capability information indicates a correspondence between a power boost amplitude of a first channel and a power back-off amplitude of a second channel. The processing unit is configured to generate first indication information. The first indication information indicates that the power boost amplitude of the first channel is a first amplitude and indicates that the power back-off amplitude of the second channel is a second amplitude. The first amplitude and the second amplitude are determined based on the capability information and a required boost amplitude of the first channel. The transceiver unit is further configured to send the first indication information to the radio frequency apparatus.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate transmit power of information carried by the first channel of the radio frequency apparatus to increase by the first amplitude, and transmit power of information carried by the second channel to reduce by the second amplitude. In this way, the radio frequency apparatus can boost, in a manner of reducing the transmit power of the information carried by the second channel, the transmit power of the information carried by the first channel, thereby improving flexibility of the power allocation.

With reference to the fourth aspect, in some implementations of the fourth aspect, the transceiver unit is further configured to send second indication information to the radio frequency apparatus. The second indication information indicates a first bandwidth. The first bandwidth is used for carrying the first channel and the second channel. The first bandwidth is determined based on the required boost amplitude and the capability information.

With reference to the fourth aspect, in some implementations of the fourth aspect, the power boost amplitude is less than or equal to the required boost amplitude.

With reference to the fourth aspect, in some implementations of the fourth aspect, the transceiver unit is further configured to send request information to the radio frequency apparatus. The request information is used for requesting the capability information.

With reference to the fourth aspect, in some implementations of the fourth aspect, the required boost amplitude corresponds to a quantity of disabled transmit channels of the radio frequency apparatus.

With reference to the fourth aspect, in some implementations of the fourth aspect, the first channel is a control channel, and the second channel is a data channel.

With reference to the fourth aspect, in some implementations of the fourth aspect, the information carried by the first channel includes a synchronization signal block SSB.

According to a fifth aspect, an apparatus for power allocation is provided. The apparatus includes a transceiver unit and a processing unit. The processing unit is configured to generate capability information. The capability information indicates a correspondence between a power boost amplitude of a first channel and a power back-off amplitude of a second channel. The transceiver unit is configured to send the capability information to a control apparatus. The transceiver unit is further configured to receive first indication information from the control apparatus. The first indication information indicates that the power boost amplitude of the first channel is a first amplitude and indicates that the power back-off amplitude of the second channel is a second amplitude. The first amplitude and the second amplitude are determined based on the capability information and a required boost amplitude of the first channel.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate transmit power of information carried by the first channel of the radio frequency apparatus to increase by the first amplitude, and transmit power of information carried by the second channel to reduce by the second amplitude. In this way, the radio frequency apparatus can boost, in a manner of reducing the transmit power of the information carried by the second channel, the transmit power of the information carried by the first channel, thereby improving flexibility of the power allocation.

With reference to the fifth aspect, in some implementations of the fifth aspect, the transceiver unit is further configured to send, based on the first amplitude indicated by the first indication information, the information carried by the first channel, and send, based on the second amplitude indicated by the first indication information, the information carried by the second channel.

With reference to the fifth aspect, in some implementations of the fifth aspect, the transceiver unit is further configured to receive second indication information from the control apparatus. The second indication information indicates a first bandwidth. The first bandwidth is used for carrying the first channel and the second channel. The first bandwidth is determined based on the required boost amplitude and the capability information.

With reference to the fifth aspect, in some implementations of the fifth aspect, the transceiver unit is further configured to send, based on the first amplitude indicated by the first indication information and the first bandwidth indicated by the second indication information, the information carried by the first channel, and send, based on the second amplitude indicated by the first indication information and the first bandwidth indicated by the second indication information, the information carried by the second channel.

With reference to the fifth aspect, in some implementations of the fifth aspect, the power boost amplitude is less than or equal to the required boost amplitude.

With reference to the fifth aspect, in some implementations of the fifth aspect, the transceiver unit is further configured to send request information to the radio frequency apparatus. The request information is used for requesting the capability information.

With reference to the fifth aspect, in some implementations of the fifth aspect, the required boost amplitude corresponds to a quantity of disabled transmit channels of the radio frequency apparatus.

With reference to the fifth aspect, in some implementations of the fifth aspect, the first channel is a control channel, and the second channel is a data channel.

With reference to the fifth aspect, in some implementations of the fifth aspect, the information carried by the first channel includes a synchronization signal block SSB.

According to a sixth aspect, an apparatus for power allocation is provided. The apparatus includes a transceiver unit and a processing unit. The processing unit is configured to generate indication information. The indication information indicates a first bandwidth. The first bandwidth is determined based on a required boost amplitude of a first channel. A numerical value of the first bandwidth is less than an initial bandwidth value. The initial bandwidth value is a bandwidth value initially configured by the control apparatus for carrying the first channel. The transceiver unit is configured to send the indication information to a radio frequency apparatus. The transceiver unit is further configured to send the first channel based on the indication information.

Therefore, in this application, the control apparatus may reduce a bandwidth used for carrying the first channel, to boost transmit power of information carried by the first channel, so that the information carried by the first channel can be reliably transmitted, thereby improving reliability of system communication.

With reference to the sixth aspect, in some implementations of the sixth aspect, the information carried by the first channel includes a synchronization signal block SSB.

According to a seventh aspect, a communication apparatus is provided. The apparatus may include a processing unit, a sending unit, and a receiving unit. Optionally, the sending unit and the receiving unit may alternatively be a transceiver unit.

When the apparatus is a control apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the apparatus to perform any method in the first aspect. When the apparatus is a chip in the control apparatus, the processing unit may be a processor, and the sending unit and the receiving unit may be an input/output interface, a pin, a circuit, or the like. The processing unit executes the instructions stored in the storage unit, to enable the chip to perform any method in the first aspect. The storage unit is configured to store instructions. The storage unit may be a storage unit (for example, a register or a cache) in the chip, or may be a storage unit located outside the chip in the apparatus (for example, a read-only memory or a random access memory).

When the apparatus is a radio frequency apparatus, the processing unit may be a processor, and the sending unit and the receiving unit may be a transceiver. The apparatus may further include a storage unit, and the storage unit may be a memory. The storage unit is configured to store instructions, and the processing unit executes the instructions stored in the storage unit, to enable the apparatus to perform any method in the second aspect. When the apparatus is a chip in the radio frequency apparatus, the processing unit may be a processor, and the sending unit and the receiving unit may be an input/output interface, a pin, a circuit, or the like. The processing unit executes the instructions stored in the storage unit, to enable the chip to perform any method in the second aspect. The storage unit is configured to store instructions. The storage unit may be a storage unit (for example, a register or a cache) in the chip, or may be a storage unit located outside the chip in the apparatus (for example, a read-only memory or a random access memory).

According to an eighth aspect, this application provides an apparatus, including a processor. The processor is coupled to a memory, and may be configured to execute instructions in the memory, to implement the method in any one of the first aspect or the possible implementations of the first aspect, or implement the method in any one of the second aspect or the possible implementations of the second aspect, or implement the method in any one of the third aspect or the possible implementations of the third aspect. The apparatus further includes the memory. The apparatus further includes a communication interface, and the processor is coupled to the communication interface.

In an implementation, the apparatus is a control apparatus. When the apparatus is a control apparatus, the communication interface may be a transceiver or an input/output interface.

In another implementation, the apparatus is a chip or a chip system configured in a control apparatus. When the apparatus is a chip or a chip system configured in a switching apparatus, the communication interface may be an input/output interface.

In an implementation, the apparatus is a radio frequency apparatus. When the apparatus is a radio frequency apparatus, the communication interface may be a transceiver or an input/output interface.

In another implementation, the apparatus is a chip or a chip system configured in a radio frequency apparatus. When the apparatus is a chip or a chip system configured in a processing apparatus, the communication interface may be an input/output interface.

The transceiver may be a transceiver circuit. The input/output interface may be an input/output circuit.

According to a ninth aspect, a computer-readable storage medium is provided. The computer-readable storage medium stores a computer program or instructions. When the computer program or the instructions are executed, the method in any possible implementation of the first aspect, the second aspect, or the third aspect is implemented.

According to a tenth aspect, a computer program product including instructions is provided. When the instructions are run, the method in any possible implementation of the first aspect, the second aspect, or the third aspect is implemented.

According to an eleventh aspect, a computer program is provided. The computer program includes code or instructions. When the code or the instructions are run, the method in any possible implementation of the first aspect, the second aspect, or the third aspect is implemented.

According to a twelfth aspect, a chip system is provided. The chip system includes a processor, and may further include a memory. The chip system is configured to implement the method in any possible implementation described in the first aspect, the second aspect, or the third aspect. The chip system may include a chip, or may include a chip and another discrete device.

According to a thirteenth aspect, a communication system is provided. The system includes the apparatus in any possible implementation of the fourth aspect and the fifth aspect, or the apparatus in any possible implementation of the sixth aspect.

### BRIEF DESCRIPTION OF DRAWINGS

FIG. 1 is a schematic diagram of a structure applicable to a communication system according to an embodiment of this application;
FIG. 2 is a schematic diagram of a structure of a system with a plurality of architectures to which an embodiment of this application is applicable;
FIG. 3 is a schematic flowchart of a method for power allocation according to an embodiment of this application;
FIG. 4 is a schematic diagram of power allocation according to an embodiment of this application;
FIG. 5 is a schematic diagram of another power allocation according to an embodiment of this application;
FIG. 6 is a schematic flowchart of another method for power allocation according to an embodiment of this application; and
FIG. 7 and FIG. 8 are schematic diagrams of structures of possible apparatuses according to embodiments of this application.

### DESCRIPTION OF EMBODIMENTS

The following describes technical solutions of this application with reference to the accompanying drawings.

Technical solutions in embodiments of this application may be applied to various communication systems, for example, a long term evolution (long term evolution, LTE) system, a frequency division duplex (frequency division duplex, FDD) system, a time division duplex (time division duplex, TDD) system, a 5^{th} generation (5^{th} generation, 5G) system or a new radio (new radio, NR), a 6^{th} generation (6^{th} generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an internet of things (Internet of things, IoT) communication system, a vehicle to everything (vehicle to everything, V2X) communication system, an unmanned aerial vehicle (unmanned aerial vehicle, UAV) communication system, or another communication system.

A network architecture and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the network architecture evolves and a new service scenario emerges.

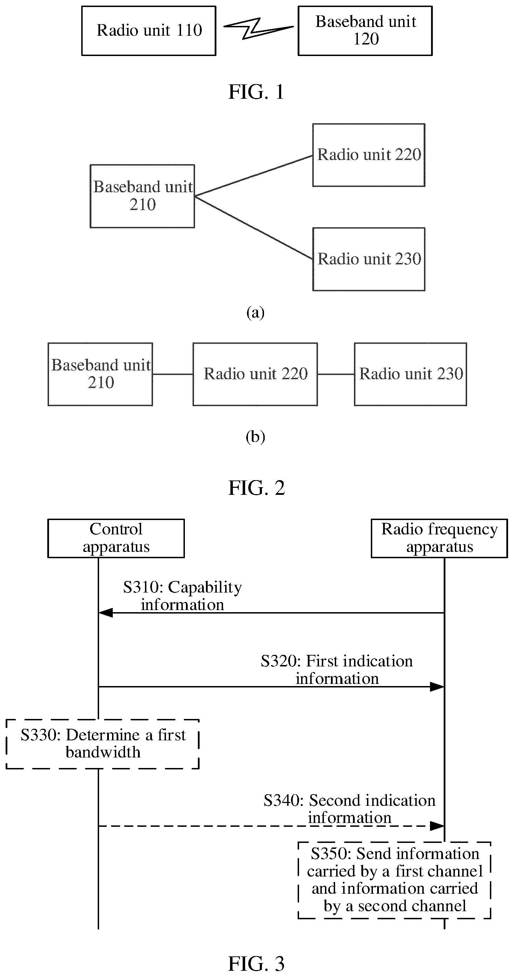

For ease of understanding of embodiments of this application, an application scenario of embodiments of this application is first described in detail with reference to FIG. 1.

FIG. 1 is a schematic diagram of a structure of a communication system to which an embodiment of this application is applicable. An apparatus that may be used in the communication system is first described.

Radio unit (radio unit, RU) 110: The radio unit 110 may implement functions such as intermediate frequency processing, radio frequency processing, and duplexing of a signal. For example, the radio unit 110 may be a remote radio unit (remote radio unit, RRU), an active antenna unit (active antenna unit, AAU), or another network element or communication apparatus that has a capability of intermediate frequency signal processing, radio frequency signal processing, or intermediate radio frequency signal processing.

Baseband unit 120: The baseband unit 120 may implement a baseband signal processing function. For example, the baseband unit 120 may include at least one of a central unit (central unit, CU), a distributed unit (distributed unit, DU), or another network element or communication apparatus that has a baseband signal processing capability. For example, the baseband unit may also be referred to as a BBU (baseband unit, BBU).

A communication interface between the baseband unit 120 and the radio unit 110 may be a fronthaul interface. For example, the interface may be a common public radio interface (common public radio interface, CPRI), an enhanced common public radio interface (enhanced CPRI, eCPRI), or another interface defined in the future for connecting the baseband unit 120 and the radio unit 110.

FIG. 2 is a schematic diagram of a structure of a system with a plurality of architectures to which an embodiment of this application is applicable. An example in which the system includes two radio units is used for description. The system includes a baseband unit 210, a radio unit 220, and a radio unit 230. The baseband unit 210 may be the baseband unit 120 in FIG. 1, and the radio unit 220 and the radio unit 230 may be the radio unit 110 in FIG. 1. This application is described by using an example in which the system includes a direct connection system and a cascaded system. For the direct connection system, refer to section (a) in FIG. 2. The baseband unit 210 separately and directly connect to the radio unit 220 and the radio unit 230. The baseband unit 210 separately performs direct communication through an interface of the radio unit 220 and an interface of the radio unit 230. For the cascaded system, refer to section (b) in FIG. 2. The baseband unit 210 is directly connected to the radio unit 220. The radio unit 220 is directly connected to the radio unit 230. The baseband unit 210 directly communicates with the radio unit 220. The baseband unit 210 may communicate with the radio unit 230 by using the radio unit 220. An interface between the radio unit 220 and the radio unit 230 may also be a fronthaul interface.

The foregoing only describes systems in several architectures to which this embodiment of this application is applicable. This embodiment of this application may further be applicable to a system in another architecture in which the radio unit can communicate with the baseband unit. This is not particularly limited in this application.

FIG. 3 is a schematic flowchart of a method 300 according to an embodiment of this application.

S310: A radio frequency apparatus sends capability information to a control apparatus.

Correspondingly, the control apparatus receives the capability information from the radio frequency apparatus.

The radio frequency apparatus may be the radio unit 110 in FIG. 1, and the control apparatus may be the baseband unit 120 in FIG. 1.

The capability information indicates a correspondence between a power boost amplitude of a first channel and a power back-off amplitude of a second channel.

It may be understood that the power boost amplitude of the first channel may be a power boost amplitude of transmit power of information carried by the first channel. The power back-off amplitude of the second channel may be a power back-off amplitude of transmit power of information carried by the second channel. In this embodiment of this application, power for sending the first channel, power for sending the information carried by the first channel, transmit power (or transmit power) of the first channel, and the transmit power (or the transmit power) of the information carried by the first channel may represent the same meaning. Correspondingly, power for sending the second channel, power for sending the information carried by the second channel, the transmit power (or the transmit power) of the second channel, and the transmit power (or the transmit power) of the information carried by the second channel may represent the same meaning. Details are not described below.

The power boost amplitude may represent a multiple that power of the first channel boosts. The multiple may be represented by a decibel (decibel, dB) (in which 1 dB=10 lg (A/B), where A/B represents a multiple, for example, A/B is a ratio of a power value (A) after the boost to a power value (B) before the boost). The power back-off amplitude may represent a multiple that power of the second channel reduces. The multiple may also be represented by a decibel. In this application, boosting power may also be understood as increasing the power and converging the power. Reducing power may also be understood as power back-off.

In addition, in this embodiment of this application, the information carried by the first channel and the information carried by the second channel may be information transmitted by the radio unit by using an antenna of the radio unit. The foregoing information carried by the channels may include data or signaling. For example, the information carried by the first channel and the information carried by the second channel may be information sent by the radio unit to a terminal device.

The first channel is a channel of which the power is boosted, and the second channel is a channel of which the power is reduced. Based on this technical solution, the power of the second channel is reduced, so that power boost of the first channel does not exceed a limit of total power of the first channel and the second channel. For example, the total power of the first channel and the second channel may be limited by a component such as a power amplifier in the radio unit. If the total power of the first channel and the second channel is greater than a specific value, there is a risk of burning out the power amplifier. Therefore, in a power allocation process, a sum of the power of the first channel and the power of the second channel is less than or equal to the specific value. When the power of the first channel is boosted, the power of the second channel may be reduced, so that a sum of power of the first channel after the boost and power of the second channel after the back-off is still less than the specific value. That is, regardless of how the power of the first channel or the power of the second channel changes, the sum of the power of the first channel and the power of the second channel of the first channel is not greater than the specific value. It may be understood that the specific value may be set based on an actual situation, and this is not limited in this application.

In a possible implementation, the first channel is a control channel, and the second channel is a data channel.

Information carried by the control channel includes control signaling, and information carried by the data channel includes data. The control signaling is necessary signaling for working of a communication system. Therefore, in some scenarios, the radio frequency apparatus may boost power of the control channel to ensure secure and reliable transmission of the control signaling.

For example, the control channel may be a physical downlink control channel (physical downlink control channel, PDCCH). The data channel may be a physical downlink shared physical channel (physical downlink shared channel, PDSCH).

Optionally, the information carried by the first channel includes a synchronization signal (synchronization signal block, SSB), and the SSB may alternatively refer to synchronization signal/physical broadcast channel block (synchronization signal/physical broadcast channel block, SS/PBCH Block).

The SSB mainly includes a primary synchronization signal (primary synchronization signal, PSS), a secondary synchronization signal (secondary synchronization signal, SSS), and a physical broadcast channel (physical broadcast channel, PBCH). The SSB includes four orthogonal frequency division multiplexing (orthogonal frequency division multiplexing, OFDM) symbols in a time domain and a two-dimensional region of 20 resource blocks (resource blocks, RBs) in a frequency domain. The terminal device may complete cell synchronization and rough symbol-level timing synchronization by demodulating the PSS and the SSS, and may complete system frame-level timing synchronization by demodulating master information block (master information block, MIB) information carried in the PBCH, to obtain related configuration information of a system information block (system information block, SIB1) that sometimes may also be referred to as remaining minimum system information (remaining minimum system information, RMSI). Therefore, the power of the first channel that carries the SSB may be boosted to ensure that a coverage area of the SSB can meet a service requirement.

For example, the capability information may include a mapping relationship between a numerical value of the power boost amplitude and a numerical value of the power back-off amplitude. For example, the capability information includes a table corresponding to the numerical value of the power boost amplitude and the numerical value of the power back-off amplitude. Alternatively, the capability information includes a function expression corresponding to the power boost amplitude and the power back-off amplitude. A description form of the correspondence is not limited in this embodiment of this application.

It may be understood that the radio frequency apparatus may obtain the correspondence in a plurality of manners. For example, the radio frequency apparatus may obtain the correspondence between the power boost amplitude and the power back-off amplitude in a manner of simulation calculation, or the radio frequency apparatus may obtain the correspondence in a manner of analyzing historical data.

In addition, the radio frequency apparatus may actively send the capability information to the control apparatus, or may send the capability information to the control apparatus based on a request of the control apparatus. In this case, before step S310, optionally, the control apparatus may send request information to the radio frequency apparatus. The request information is used for requesting the capability information. Further, the radio frequency apparatus may send the capability information to the control apparatus in response to the request information.

S320: The control apparatus sends first indication information to the radio frequency apparatus.

Correspondingly, the radio frequency apparatus receives the first indication information from the control apparatus.

The first indication information indicates that the power boost amplitude of the first channel is a first amplitude and that the power back-off amplitude of the second channel is a second amplitude.

For example, the first indication information may directly indicate that the power boost amplitude of the first channel is the first amplitude and that the power back-off amplitude of the second channel is the second amplitude. For example, the first indication information may include an information field indicating the power boost amplitude of the first channel and an information field indicating the power back-off amplitude of the second channel. The two information fields respectively include a numerical value of the first amplitude and a numerical value of the second amplitude. Alternatively, the first indication information may indirectly indicate that the power boost amplitude of the first channel is the first amplitude and that the power back-off amplitude of the second channel is the second amplitude. For example, the first indication information may indicate that a numerical value of the first amplitude is a maximum value of the power boost amplitude of the first channel. Further, the radio frequency apparatus may determine the numerical value of the first amplitude. Then, a numerical value of the second amplitude is determined based on the numerical value of the first amplitude and the correspondence between the power boost amplitude of the first channel and the power back-off amplitude of the second channel. Alternatively, the first indication information may indicate, in a combination of direct indication and indirect indication, that the power boost amplitude of the first channel is the first amplitude and that the power back-off amplitude of the second channel is the second amplitude. For example, the first indication information indicates an information field of the power boost amplitude of the first channel. The information field includes data of the first amplitude. In addition, the first indication information indirectly indicates that the radio frequency apparatus determines a numerical value of the second amplitude based on a numerical value of the first amplitude and the correspondence. In a specific implementation process, the first indication information performs indications in a plurality of forms. This is not particularly limited in this application.

In a possible implementation, the control apparatus may determine the first amplitude and the second amplitude based on the capability information and a required boost amplitude of the first channel, and send the capability information based on the determined first amplitude and the determined second amplitude.

The following describes the required boost amplitude of the first channel.

To meet a service requirement, the control apparatus may boost the power of the first channel to a specific power. An amplitude by which the power is boosted to the specific power is the required boost amplitude. The control apparatus may determine the required boost amplitude by analyzing a service or an operating condition. It may be understood that the required boost amplitude is set based on the service requirement.

For example, the required boost amplitude corresponds to a quantity of disabled transmit channels of the radio frequency apparatus. In some scenarios, the radio frequency apparatus may disable some radio frequency channels to reduce energy consumption. However, because disabling of the radio frequency channels may cause a transmit power loss of the first channel, to ensure that sending quality of the first channel meets a requirement, the control apparatus may determine the required boost amplitude based on the quantity of the disabled transmit channels of the radio frequency apparatus. The control apparatus may pre-configure a correspondence between the quantity of the disabled radio frequency channels and the required boost amplitude. Alternatively, the control apparatus may determine the required boost amplitude based on a quantity of transmit channels by using a preset algorithm. This is not particularly limited in this application.

It may be understood that the power boost requirement may also be related to system interference strength, service load, and the like. For example, when performing power allocation, the control apparatus may determine the required boost amplitude of the first channel based on a current operating environment of a system. For example, when an operating condition of a transmit antenna of the system is poor and the interference strength is high, to ensure that a coverage area for sending the first channel meets an operating requirement, the control apparatus may determine the required boost amplitude.

The control apparatus may obtain the required boost amplitude of the first channel. For example, the foregoing control apparatus determines the required boost amplitude based on the quantity of the disabled transmit channels of the radio frequency apparatus, and obtains the power boost amplitude of the first channel. For example, the control apparatus information determines at least one power boost amplitude of the first channel based on the table corresponding to the power boost amplitude of the first channel and the power back-off amplitude of the second channel included in the capability information. For example, when the required boost amplitude may be a value of the at least one power boost amplitude, the control apparatus may take the first amplitude as the required boost amplitude. Alternatively, the required boost amplitude may be values of two power boost amplitudes in the at least one power boost amplitude. In this case, the control apparatus may take a larger value in the two power boost amplitudes as the first amplitude. In addition, the control apparatus may determine a value of the second amplitude based on the first amplitude and the corresponding table. The following describes, by using an example, a manner in which the control apparatus determines the first amplitude and the second amplitude based on the capability information.

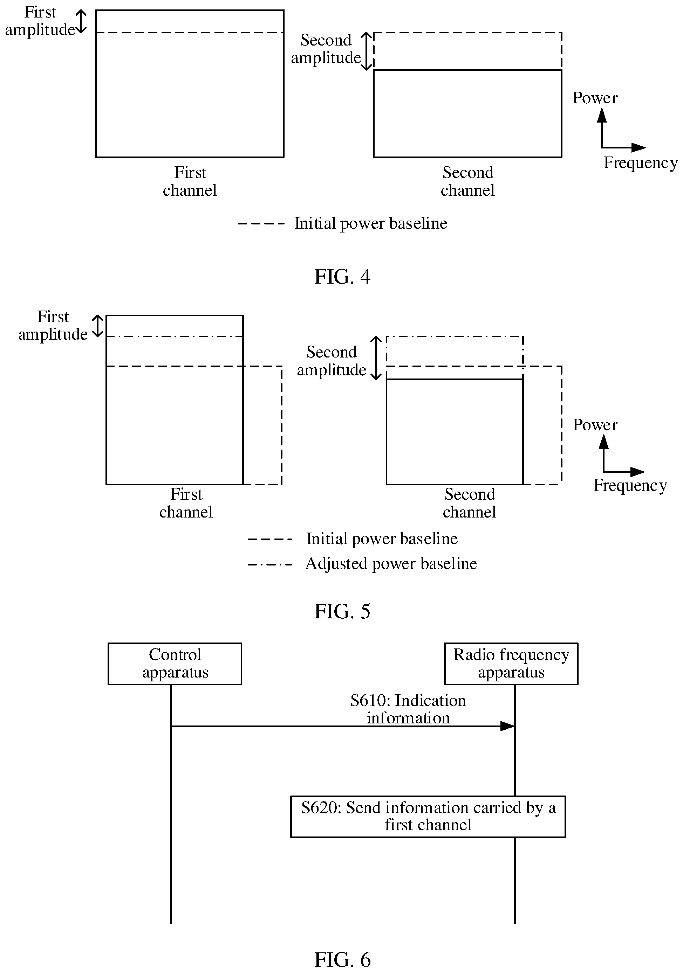

For example, the capability information indicates that when the power boost amplitude of the first channel is 1 dB, correspondingly, the power back-off amplitude of the second channel is 1.5 dB. When the power boost amplitude of the first channel is 2 dB, correspondingly, the power back-off amplitude of the second channel is 3 dB. If the required boost amplitude of the first channel is 1 dB, the control apparatus may determine that the first amplitude is 1 dB and the second amplitude is 1.5 dB, and determine the first indication information. The first indication information indicates that the first amplitude is 1 dB and that the second amplitude is 1.5 dB. If the required boost amplitude of the first channel is 1.5 dB, the control apparatus may round up the first amplitude as 2 dB and the second amplitude as 1.5 dB, and determine the first indication information. The first indication information indicates that the first amplitude is 2 dB and that the second amplitude is 1.5 dB. A description is provided with reference to FIG. 4. FIG. 4 is a schematic diagram of power allocation performed by the control apparatus in a manner of reducing the power of the second channel to boost the power of the first channel. An initial power baseline is a power baseline before the power of the first channel is boosted and before the power of the second channel is reduced. The control apparatus boosts the power of the first channel by the first amplitude and reduces the power of the second channel by the second amplitude based on the initial power baseline. In addition, it should be noted that the schematic diagram in FIG. 4 is merely used for describing a power allocation manner, and is not drawn to scale. Numerical values of the initial power baseline, a frequency, the first amplitude, and the second amplitude are not limited.

Therefore, based on the foregoing description, the control apparatus determines the power allocation manner based on the capability information sent by the radio frequency apparatus and the required boost amplitude of the first channel, so that the system can run reliably by boosting the power of the first channel and reducing the power of the second channel.

It should be noted that when the control apparatus performs the power allocation, in addition to the foregoing manner of boosting the power of the first channel and reducing the power of the second channel, the control apparatus may alternatively adjust the transmit power of the first channel and the transmit power of the second channel in combination with a manner of adjusting a bandwidth. The following describes a manner in which the control apparatus adjusts the bandwidth with reference to step S330 and step S340.

Optionally, S330: The control apparatus determines a first bandwidth. The first bandwidth is used for carrying the first channel and the second channel.

In other words, the first bandwidth includes a bandwidth for carrying the first channel and the second channel.

It should be noted that the first bandwidth is related to a power spectrum corresponding to a channel, and the power spectrum describes a correspondence between a frequency and power. For example, the power spectrum may describe power of a signal sent by each carrier corresponding to the first bandwidth. An area covered by a power spectrum curve is numerically equal to total power of the signal. When the power is limited, spectral density of the power spectrum can be increased by reducing the first bandwidth, so that power boost is performed on the channels based on basic power or basic power in power back-off is boosted. The basic power may also be referred to as a power baseline. Further, the radio frequency apparatus may perform the power boost based on an increased power baseline of the first channel, so that the transmit power of the first channel can further be improved. In other words, the transmit power of the first channel is a product of the power baseline and a multiple of the boost. The radio frequency apparatus may determine the power baseline by using the first bandwidth, and determine the multiple of the boost by using the first amplitude indicated by the first indication information, to determine the transmit power of the first channel.

It should be understood that the first bandwidth may further carry another channel. For example, if the control apparatus performs resource scheduling by using a resource block (resource block, RB) as a granularity, the first bandwidth may be a bandwidth corresponding to the RB, and the first bandwidth may carry a channel carried in the RB.

In a possible implementation, the control apparatus may determine the first bandwidth, the first amplitude, and the second amplitude based on the capability information and the required boost amplitude. For example, when allocating power, the control apparatus may set respective proportions of two manners in which the power of the first channel is boosted by reducing the power of the second channel and the power baseline of the first channel is increased by reducing the first bandwidth. For example, if the required boost amplitude is 2 dB, the control apparatus may increase the power by 1 dB in a manner of reducing the first bandwidth, and increase the power by 1 dB in a manner of reducing the power of the second channel. This is not limited in this application.

In another possible implementation, when the power boost amplitude is less than the required boost amplitude, the control apparatus may determine the first bandwidth, the first amplitude, and the second amplitude based on the capability information and the required boost amplitude. In other words, the control apparatus may preferentially use a manner of reducing the power of the second channel to boost the power of the first channel. When the power boost amplitude indicated by the capability information is less than the required boost amplitude, the control apparatus further boosts the power of the first channel in combination with a manner of increasing the power baseline by reducing a bandwidth. For example, if the required boost amplitude is 2 dB, and the capability information indicates that the maximum value of the power boost amplitude of the first channel is 1.5 dB, the control apparatus may increase the power by 1.5 dB in a manner of reducing the power of the second channel, and increase the power by 0.5 dB in a manner of reducing the first bandwidth.

A description is provided with reference to FIG. 5. FIG. 5 is a schematic diagram in which the control apparatus performs the power allocation in a manner of combining the two manners. The control apparatus increases an initial power baseline to an adjusted baseline by reducing the bandwidth used for carrying the first channel and the second channel. In addition, the control apparatus determines, based on the adjusted power baseline, that the first channel increases by the first amplitude and the second channel reduces by the second amplitude. In addition, it should be noted that the schematic diagram in FIG. 5 is merely used for describing a power allocation manner, and is not drawn to scale. Numerical values of the initial power baseline, the adjusted power baseline, a frequency, the first amplitude, and the second amplitude are not limited.

Optionally, S340: The control apparatus sends second indication information to the radio frequency apparatus.

Correspondingly, the radio frequency apparatus receives the second indication information from the control apparatus.

The second indication information indicates the first bandwidth.

In a possible implementation, the second indication information includes a bandwidth value of the first bandwidth or a change amplitude of the first bandwidth, for example, a reduction amplitude of the first bandwidth. Further, the radio frequency apparatus may determine, based on the bandwidth value or the reduction amplitude, that the initial power baseline of the first channel and the second channel are boosted to the adjusted power baseline. Therefore, the radio frequency apparatus may increase the power of the first channel by the first amplitude and reduce the power of the second channel by the second amplitude based on the adjusted power baseline.

In another possible implementation, the second indication information includes power spectrum parameters corresponding to the first channel and the second channel. Further, the radio frequency apparatus may determine, based on the power spectrum parameters, the first bandwidth used for carrying the first channel and the second channel and the adjusted power baseline corresponding to the first bandwidth. Therefore, the radio frequency apparatus may increase the power of the first channel by the first amplitude and reduce the power of the second channel by the second amplitude based on the adjusted power baseline.

Optionally, the power spectrum parameter includes a clipping parameter. Further, the radio frequency apparatus may reduce a peak-to-average ratio of the power spectrum based on the clipping parameter, and improve reliability of the power allocation, to avoid signal nonlinear distortion and spectrum regrowth caused by a bandwidth adjustment. The peak-to-average ratio is a ratio of peak power to average power or a root mean square of a power spectrum curve. If the peak-to-average ratio is greater than a specific value, it means that sending a signal by the radio frequency apparatus based on the power spectrum causes an internal component such as a power amplifier to overheat, and consequently the power amplifier is at risk of burning out.

It should be noted that the control apparatus may separately send the first indication information and the second indication information to the radio frequency apparatus, or may combine the first indication information and the second indication information into one piece of information and send the information to the radio frequency apparatus. This is not particularly limited in this application.

Optionally, S350: The radio frequency apparatus sends, based on the first indication information, the information carried by the first channel, and sends the information carried by the second channel.

When the radio frequency apparatus further receives the second indication information from the control apparatus, the radio frequency apparatus may send, based on the first indication information and the second indication information, the information carried by the first channel, and send the information carried by the second channel.

For example, the radio frequency apparatus may determine the transmit power of the first channel and the transmit power of the second channel based on the first indication information or the first indication information and the second indication information, and send, by using the antenna of the radio frequency apparatus, the information carried by the first channel and the information carried by the second channel.

It should be noted that in the foregoing examples, although the power boost amplitude, the power back-off amplitude, the required boost amplitude, the first amplitude, and the second amplitude are described in a form of decibels, this form is not particularly limited in this application. For example, embodiments provided in this application may also be implemented in a form of multiples, a specific power value, or the like.

Therefore, in this application, the control apparatus may dynamically determine the power boost amplitude of the first channel and the power back-off amplitude of the second channel based on the capability information sent by the radio frequency apparatus, thereby improving flexibility of the power allocation.

The foregoing describes how the control apparatus determines the power boost amplitude of the first channel and the power back-off amplitude of the second channel based on the capability information sent by the radio frequency apparatus, and optionally further improves the transmit power of the first channel by adjusting the bandwidth used for carrying the first channel and the second channel. An embodiment of this application further provides a method. In the method, a first bandwidth may be directly adjusted based on a requirement on a boost amplitude. This is described below.

FIG. 6 is a schematic flowchart of another method for power allocation according to an embodiment of this application.

S610: A control apparatus sends indication information to a radio frequency apparatus.

Correspondingly, the radio frequency apparatus receives the indication information from the control apparatus.

The indication information indicates the first bandwidth. The first bandwidth is determined based on a required boost amplitude of a first channel.

For example, the control apparatus may determine the first bandwidth based on the required boost amplitude of the first channel. The first bandwidth is used for carrying the first channel. A numerical value of the first bandwidth is less than an initial bandwidth value of an initial bandwidth. For example, the initial bandwidth value may be a bandwidth value initially configured by the control apparatus for carrying the initial bandwidth of the first channel.

Optionally, information carried by the first channel includes an SSB.

For descriptions of the first channel and the required boost amplitude, refer to descriptions in FIG. 4. For simplicity, details are not described herein again.

The control apparatus may boost power of the first channel by reducing the bandwidth.

In a possible implementation, the control apparatus may pre-configure a correspondence between the first bandwidth and a power boost amplitude of the first channel, for example, a mapping relationship between a reduction amplitude of the first bandwidth and the power boost amplitude of the first channel. Further, the control apparatus may determine the first bandwidth based on the required boost amplitude and the correspondence. In another possible implementation, the control apparatus may determine the first bandwidth based on the required boost amplitude by using a preset algorithm. A specific implementation is not limited in this application.

In a possible implementation, the indication information includes a bandwidth value of the first bandwidth or a reduction amplitude of the first bandwidth.

In another possible implementation, the indication information includes a power spectrum parameter corresponding to the first channel. Optionally, the power spectrum parameter may further include a clipping parameter.

S620: The radio frequency apparatus sends, based on the indication information, the information carried by the first channel.

For example, the radio frequency apparatus may determine transmit power of the first channel based on the indication information, and send, by using an antenna of the radio frequency apparatus, the information carried by the first channel, for example, the radio frequency apparatus may send the information carried by the first channel to a terminal device.

If the indication information includes the bandwidth value of the first bandwidth or the reduction amplitude of the first bandwidth, the radio frequency apparatus may determine, based on the bandwidth value or the reduction amplitude, that an initial power baseline of the first channel is increased to an adjusted power baseline. The initial power baseline is a power baseline of a power spectrum before the first bandwidth is reduced.

If the indication information includes the power spectrum parameter corresponding to the first channel, the radio frequency apparatus may determine, based on the power spectrum parameter, the first bandwidth used for carrying the first channel and an adjusted power baseline corresponding to the first bandwidth. If the power spectrum parameter includes the clipping parameter, the radio frequency apparatus may reduce a peak-to-average ratio of the power spectrum based on the clipping parameter, to avoid signal nonlinear distortion and spectrum regrowth caused by a bandwidth adjustment, thereby improving reliability of the power allocation.

It may be understood that the radio frequency apparatus may determine the power boost amplitude of the first channel based on the indication information. The power boost amplitude is a boost amplitude of the adjusted power baseline compared with the initial power baseline. Further, the radio frequency apparatus may determine the transmit power of the first channel based on the indication information, and send, by using the antenna of the radio frequency apparatus, the information carried by the first channel.

Therefore, in this application, the control apparatus may determine a bandwidth used for carrying the first channel, to boost the transmit power of the first channel, so that the first channel can be reliably transmitted, thereby improving reliability of system communication.

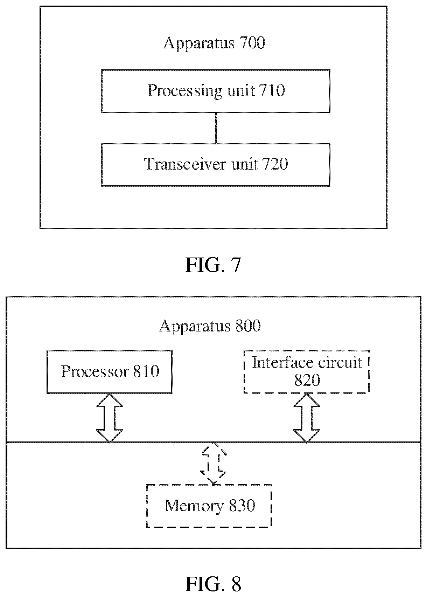

FIG. 7 and FIG. 8 are schematic diagrams of structures of possible apparatuses according to embodiments of this application. These apparatuses may be configured to implement functions of the control apparatus and the radio frequency apparatus in the foregoing method embodiments. Therefore, beneficial effects of the foregoing method embodiments can also be achieved. In embodiments of this application, the apparatuses may be a control apparatus and a radio frequency apparatus, or may be modules (such as chips) used in the control apparatus and the radio frequency apparatus.

As shown in FIG. 7, an apparatus 700 includes a processing unit 710 and a transceiver unit 720. The apparatus 700 is configured to implement functions of the control apparatus or the radio frequency apparatus in the method embodiment shown in FIG. 4. Alternatively, the apparatus 700 may include a module configured to implement any function or operation of the control apparatus or the radio frequency apparatus in the method embodiment shown in FIG. 4. The module may be completely or partially implemented by using software, hardware, firmware, or any combination thereof.

When the apparatus 700 is configured to implement functions of the control apparatus in the method embodiment shown in FIG. 3, the transceiver unit 720 is configured to receive capability information from the radio frequency apparatus. The capability information indicates a correspondence between a power boost amplitude of a first channel and a power back-off amplitude of a second channel. The processing unit 710 is configured to generate first indication information. The first indication information indicates that the power boost amplitude of the first channel is a first amplitude and indicates that the power back-off amplitude of the second channel is a second amplitude. The first amplitude and the second amplitude are determined based on the capability information and a required boost amplitude of the first channel. The transceiver unit 720 is further configured to send the first indication information to the radio frequency apparatus.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate transmit power of information carried by the first channel of the radio frequency apparatus to increase by the first amplitude, and transmit power of information carried by the second channel to reduce by the second amplitude. In this way, the radio frequency apparatus can boost, in a manner of reducing the transmit power of the information carried by the second channel, the transmit power of the information carried by the first channel, thereby improving flexibility of power allocation.

For more detailed descriptions about the processing unit 710 and the transceiver unit 720, refer directly to related descriptions in the method embodiment shown in FIG. 3. Details are not described herein again.

When the apparatus 700 is configured to implement functions of the radio frequency apparatus in the method embodiment shown in FIG. 3, the processing unit 710 is configured to generate capability information. The capability information indicates a correspondence between a power boost amplitude of a first channel and a power back-off amplitude of a second channel. The transceiver unit 720 is configured to send the capability information to the control apparatus. The transceiver unit 720 is further configured to receive first indication information from the control apparatus. The first indication information indicates that the power boost amplitude of the first channel is a first amplitude and indicates that the power back-off amplitude of the second channel is a second amplitude. The first amplitude and the second amplitude are determined based on the capability information and a required boost amplitude of the first channel.

Therefore, in this application, the control apparatus may learn of the correspondence between the power boost amplitude of the first channel and the power back-off amplitude of the second channel based on the capability information. Further, based on the required boost amplitude of the first channel and the capability information, the control apparatus can indicate transmit power of information carried by the first channel of the radio frequency apparatus to increase by the first amplitude, and transmit power of information carried by the second channel to reduce by the second amplitude. In this way, the radio frequency apparatus can boost, in a manner of reducing the transmit power of the information carried by the second channel, the transmit power of the information carried by the first channel, thereby improving flexibility of power allocation.

For more detailed descriptions about the processing unit 710 and the transceiver unit 720, refer directly to related descriptions in the method embodiment shown in FIG. 3. Details are not described herein again.

When the apparatus 700 is configured to implement functions of the control apparatus in the method embodiment shown in FIG. 6, the processing unit 710 generates indication information. The indication information indicates a first bandwidth. The first bandwidth is determined based on a required boost amplitude of a first channel. A numerical value of the first bandwidth is less than an initial bandwidth value. The initial bandwidth value is a bandwidth value initially configured by the control apparatus for carrying the first channel. The transceiver unit 720 is configured to send the indication information to the radio frequency apparatus. The transceiver unit 720 is further configured to send the first channel based on the indication information.

For more detailed descriptions about the processing unit 710 and the transceiver unit 720, refer directly to related descriptions in the method embodiment shown in FIG. 6. Details are not described herein again.

Therefore, in this application, the control apparatus may determine a bandwidth used for carrying the first channel, to boost transmit power of information carried by the first channel, so that the information carried by the first channel can be reliably transmitted, thereby improving reliability of system communication.

As shown in FIG. 8, an apparatus 800 includes a processor 810, and optionally further includes an interface circuit 820. The processor 810 and the interface circuit 820 are coupled to each other. It may be understood that the interface circuit 820 may be a transceiver or an input/output interface. Optionally, the apparatus 800 may further include a memory 830 configured to store instructions to be executed by the processor 810, store input data required for running the instructions by the processor 810, or store data generated after the processor 810 runs the instructions.

When the apparatus 800 is configured to implement functions of the control apparatus in the method embodiment in FIG. 3, the processor 810 is configured to implement functions of the processing unit 710, and the interface circuit 820 is configured to implement functions of the transceiver unit 720.

When the apparatus 800 is configured to implement functions of the radio frequency apparatus in the method embodiment in FIG. 3, the processor 810 is configured to implement functions of the processing unit 810, and the interface circuit 820 is configured to implement functions of the transceiver unit 720.

When the apparatus 800 is configured to implement functions of the control apparatus in the method embodiment in FIG. 6, the processor 810 is configured to implement functions of the processing unit 810, and the interface circuit 820 is configured to implement functions of the transceiver unit 720.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The memory in embodiments of this application may be a random access memory (Random Access Memory, RAM), a flash memory, a read-only memory (Read-Only Memory, ROM), or a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may exist in the network device or the terminal device as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, a terminal device, or another programmable apparatus. The computer program or the instructions may be stored in a computer-readable storage medium, or may be transmitted through the computer-readable storage medium. The computer-readable storage medium may be any usable medium accessible by the computer, or a data storage device such as a server integrating one or more usable media. The usable medium may be a magnetic medium, for example, a floppy disk, a hard disk, or a magnetic tape, or may be an optical medium, for example, a DVD, or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be understood that in embodiments of this application, numbers "first", "second", and the like are merely used to distinguish between different objects, for example, to distinguish between different network devices, and constitute no limitation on the scope of embodiments of this application. This is not limited in embodiments of this application.

It should further be understood that in this application, "when", "if", and "if" all refer to that a network element performs corresponding processing in an objective case, and are not intended to limit time, and are not required to perform a determining action during implementation of the network element, nor does it imply that there is any other limitation.

It should further be understood that, in embodiments of this application, "B corresponding to A" indicates that B is associated with A, and B may be determined based on A. However, it should further be understood that determining A based on B does not mean that B is only determined based on A, and B may be alternatively determined based on A and/or other information.

It should further be understood that the term "and/or" in this specification is merely an association relationship for describing associated objects, and indicates that three relationships may exist. For example, A and/or B may represent the following three cases: Only A exists, both A and B exist, and only B exists. In addition, the character "/" in this specification generally indicates an "or" relationship between the associated objects.

It should further be understood that, in embodiments of this application, "indication" may include a direct indication and an indirect indication, or may include an explicit indication and an implicit indication. If information indicated by a message (such as the capability information described above) is referred to as to-be-indicated information, in a specific implementation process, there are many manners of indicating the to-be-indicated information. For example, but not limited to, the to-be-indicated information such as the to-be-indicated information or an index of the to-be-indicated information, may be directly indicated. Alternatively, the to-be-indicated information may be indirectly indicated by indicating other information. An association relationship exists between the other information and the to-be-indicated information. Alternatively, only a part of the to-be-indicated information may be indicated, and another part of the to-be-indicated information is known or agreed in advance. For example, specific information may further be indicated by using a pre-agreed arrangement sequence of each piece of information, so that indication overheads can be reduced to some extent.

Unless otherwise specified, an expression similar to "a project includes one or more of the following: A, B, and C" existing in this application usually means that the project can be any of the following: A; B; C; A and B; A and C; B and C; A, B and C; A and A; A, A and A; A, A and B; A, A and C; A, B and B; A, C and C; B and B; B, B and B; B, B and C; C and C; C, C and C, and another combination of A, B and C. The above uses three elements A, B, and C as examples to illustrate optional items of the project. When expressed as "the project includes at least one of the following: A, B, ..., and X", that is, when there are more elements in the expression, an item to which the item can be applied may also be obtained based on the foregoing rules.

It may be understood that various numerical numbers in embodiments of this application are merely distinguished for ease of description, and are not intended to limit the scope of embodiments of this application. Sequence numbers of the foregoing processes do not mean execution sequences. The execution sequences of the processes should be determined based on functions and internal logic of the processes.

## Claims

1. A method for power allocation, wherein the method comprises:
receiving, by a control apparatus, capability information from a radio frequency apparatus, wherein the capability information indicates a correspondence between a power boost amplitude of a first channel and a power back-off amplitude of a second channel; and
sending, by the control apparatus, first indication information to the radio frequency apparatus, wherein the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel.

2. The method according to claim 1, wherein the method further comprises:
sending, by the control apparatus, second indication information to the radio frequency apparatus, wherein the second indication information indicates a first bandwidth, the first bandwidth is used for carrying the first channel and the second channel, and the first bandwidth is determined based on the required boost amplitude and the capability information.

3. The method according to claim 2, wherein the power boost amplitude is less than or equal to the required boost amplitude.

4. The method according to any one of claims 1 to 3, wherein the method further comprises:
sending, by the control apparatus, request information to the radio frequency apparatus, wherein the request information is used for requesting the capability information.

5. The method according to any one of claims 1 to 4, wherein the required boost amplitude corresponds to a quantity of disabled transmit channels of the radio frequency apparatus.

6. The method according to any one of claims 1 to 5, wherein the first channel is a control channel, and the second channel is a data channel.

7. The method according to any one of claims 1 to 6, wherein information carried by the first channel comprises a synchronization signal block SSB.

8. A method for power allocation, wherein the method comprises:
sending, by a radio frequency apparatus, capability information to a control apparatus, wherein the capability information indicates a correspondence between a power boost amplitude of a first channel and a power back-off amplitude of a second channel; and
receiving, by the radio frequency apparatus, first indication information from the control apparatus, wherein the first indication information indicates that the power boost amplitude of the first channel is a first amplitude and that the power back-off amplitude of the second channel is a second amplitude, and the first amplitude and the second amplitude are determined based on the capability information and a required boost amplitude of the first channel.

9. The method according to claim 8, wherein the method further comprises:
sending, by the radio frequency apparatus based on the first amplitude indicated by the first indication information, information carried by the first channel, and sending, based on the second amplitude indicated by the first indication information, information carried by the second channel.

10. The method according to claim 9, wherein the method further comprises:
receiving, by the radio frequency apparatus, second indication information from the control apparatus, wherein the second indication information indicates a first bandwidth, the first bandwidth is used for carrying the first channel and the second channel, and the first bandwidth is determined based on the required boost amplitude and the capability information.

11. The method according to claim 10, wherein the method further comprises:
the sending, by the radio frequency apparatus based on the first amplitude indicated by the first indication information, information carried by the first channel, and sending, based on the second amplitude indicated by the first indication information, information carried by the second channel comprises:
sending, by the radio frequency apparatus based on the first amplitude indicated by the first indication information and the first bandwidth indicated by the second indication information, the information carried by the first channel, and sending, based on the second amplitude indicated by the first indication information and the first bandwidth indicated by the second indication information, the information carried by the second channel.

12. The method according to claim 10 or 11, wherein the power boost amplitude is less than the required boost amplitude.

13. The method according to any one of claims 8 to 12, wherein the method further comprises:
sending, by the control apparatus, request information to the radio frequency apparatus, wherein the request information is used for requesting the capability information.

14. The method according to any one of claims 8 to 13, wherein the required boost amplitude corresponds to a quantity of disabled transmit channels of the radio frequency apparatus.

15. The method according to any one of claims 8 to 14, wherein the first channel is a control channel, and the second channel is a data channel.

16. The method according to any one of claims 8 to 15, wherein the information carried by the first channel comprises a synchronization signal block SSB.

17. An apparatus for power allocation, wherein the apparatus comprises a transceiver unit and a processing unit;
the transceiver unit is configured to receive capability information from a radio frequency apparatus, wherein the capability information indicates a correspondence between a power boost amplitude of a first channel and a power back-off amplitude of a second channel;
the processing unit is configured to generate first indication information, wherein the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel; and
the transceiver unit is further configured to send the first indication information to the radio frequency apparatus.

18. The apparatus according to claim 17, wherein
the transceiver unit is further configured to send second indication information to the radio frequency apparatus, wherein the second indication information indicates a first bandwidth, the first bandwidth is used for carrying the first channel and the second channel, and the first bandwidth is determined based on the required boost amplitude and the capability information.

19. The apparatus according to claim 18, wherein the power boost amplitude is less than or equal to the required boost amplitude.

20. The apparatus according to any one of claims 17 to 19, wherein
the transceiver unit is further configured to send request information to the radio frequency apparatus, and the request information is used for requesting the capability information.

21. An apparatus for power allocation, wherein the apparatus comprises a transceiver unit and a processing unit;
the processing unit is configured to generate capability information, wherein the capability information indicates a correspondence between a power boost amplitude of a first channel and a power back-off amplitude of a second channel;
the transceiver unit is configured to send the capability information to a control apparatus; and
the transceiver unit is further configured to receive first indication information from the control apparatus, wherein the first indication information indicates that the power boost amplitude of the first channel is a first amplitude and indicates that the power back-off amplitude of the second channel is a second amplitude, and the first amplitude and the second amplitude are determined based on the capability information and a required boost amplitude of the first channel.

22. The apparatus according to claim 21, wherein
the transceiver unit is further configured to send, based on the first amplitude indicated by the first indication information, information carried by the first channel, and send, based on the second amplitude indicated by the first indication information, information carried by the second channel.

23. The apparatus according to claim 22, wherein
the transceiver unit is further configured to receive second indication information from the control apparatus, wherein the second indication information indicates a first bandwidth, the first bandwidth is used for carrying the first channel and the second channel, and the first bandwidth is determined based on the required boost amplitude and the capability information.

24. The apparatus according to claim 23, wherein
the transceiver unit is configured to send, based on the first amplitude indicated by the first indication information and the first bandwidth indicated by the second indication information, the information carried by the first channel, and send, based on the second amplitude indicated by the first indication information and the first bandwidth indicated by the second indication information, the information carried by the second channel.

25. The apparatus according to claim 23 or 24, wherein
the transceiver unit is further configured to send request information to the radio frequency apparatus, and the request information is used for requesting the capability information.

26. A communication apparatus, comprising a processor, wherein the processor is coupled to a memory, the memory is configured to store a computer program or instructions, and the processor is configured to execute the computer program or the instructions, to implement the method according to any one of claims 1 to 7 or the method according to any one of claims 8 to 16.

27. A system for power allocation, comprising the apparatus according to any one of claims 17 to 20 and the apparatus according to any one of claims 21 to 25.

28. A computer program product, comprising instructions, wherein when the instructions are run on a computer, the computer is enabled to perform the method according to any one of claims 1 to 7, or the computer is enabled to perform the method according to any one of claims 8 to 16.

29. A computer-readable storage medium, comprising a computer program, wherein when the computer program is run on a computer, the computer is enabled to perform the method according to any one of claims 1 to 7, or the computer is enabled to perform the method according to any one of claims 8 to 16.

30. A chip, wherein the chip comprises a processor and an interface circuit, the interface circuit is coupled to the processor, and the processor is configured to run a computer program or instructions, to enable a computer performs the method according to any one of claims 1 to 7, or to enable a computer to perform the method according to any one of claims 8 to 16.

31. A communication apparatus, configured to enable a computer to perform the method according to any one of claims 1 to 7, or to enable a computer to perform the method according to any one of claims 8 to 16.
